(19) Europäisches Patentamt
European Patent Office
Office européen des brevets

(11) EP 2 743 322 A1

(12) **EUROPEAN PATENT APPLICATION**
published in accordance with Art. 153(4) EPC

(43) Date of publication:
**18.06.2014 Bulletin 2014/25**

(21) Application number: **12822570.3**

(22) Date of filing: **27.07.2012**

(51) Int Cl.:
*C09J 7/02* (2006.01) *B32B 27/00* (2006.01)
*C09J 9/02* (2006.01) *C09J 201/00* (2006.01)
*G02B 5/30* (2006.01) *G02F 1/1333* (2006.01)

(86) International application number:
**PCT/JP2012/069130**

(87) International publication number:
**WO 2013/021838 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2011 JP 2011174559**
**10.08.2011 JP 2011174560**

(71) Applicant: **Nitto Denko Corporation**
**Ibaraki-shi, Osaka 567-8680 (JP)**

(72) Inventor: **JO, Souya**
**Ibaraki-shi**
**Osaka 567-8680 (JP)**

(74) Representative: **Müller-Boré & Partner Patentanwälte PartG mbB**
**Friedenheimer Brücke 21**
**80639 München (DE)**

(54) **SURFACE PROTECTION FILM**

(57) Provided is a novel surface protective film that can express sufficiently high antistatic property and sufficiently high wettability, and is excellent in reworkability (light peelability). The surface protective film includes a base material layer and a pressure-sensitive adhesive layer, in which the pressure-sensitive adhesive layer contains an ionic liquid or an alkali metal salt.

FIG. 1

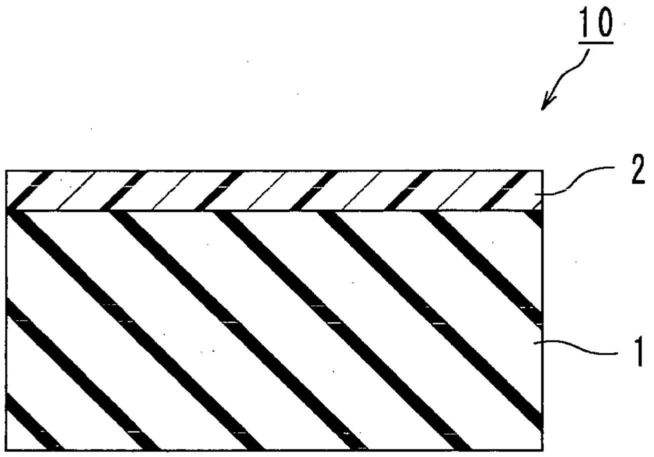


EP 2 743 322 A1

## Description

### Technical Field

The present invention relates to a surface protective film. The surface protective film of the present invention includes a base material layer and a pressure-sensitive adhesive layer, and is used in, for example, an application where a surface of a display member or an image recognition member is protected by attaching the film to the surface.

### Background Art

A surface protective film may be attached to the surface of a display member or an image recognition member for preventing the flaw, dirt, and the like of the surface.

Such surface protective film is manually attached in many cases. When the surface protective film is manually attached as just described, there is an inconvenience in that undesired air bubbles may be formed and left between an adherend and the surface protective film in many cases.

A technology involving adding a plasticizer to the pressure-sensitive adhesive layer of the surface protective film to improve its wettability has been reported as a technology for preventing the air bubbles from being formed and left between the adherend and the surface protective film when the surface protective film is manually attached to the adherend (Patent Literature 1).

Further, when the surface protective film is manually attached to the adherend, antistatic property as well as wettability is requiredinmanycases. The same surface protective film is subjected to manual attachment and manual peeling any number of times in many cases. Hence, when the adherend is not subjected to an antistatic treatment, a peeling electrification voltage of the adherend to be generated upon peeling of the protective film becomes larger, resulting in a failure.

For example, foreign matter is collected in the adherend to contaminate an optical member. In addition, in the optical member such as a polarizing plate, when a voltage is applied to liquid crystal in a large amount of static electricity, alignment of liquid crystal molecules may be lost or defects may occur in a panel.

### Citation List

#### Patent Literature

[PTL 1] JP 2010-209324 A

### Summary of Invention

#### Technical Problem

The present invention has been made to solve the conventional problems, and an object of the present invention is to provide a novel surface protective film that can express sufficiently high wettability without forming and leaving the air bubbles and that is excellent in reworkability (light peelability) and antistatic property upon peeling.

#### Solution to Problem

A surface protective film according to one embodiment of the present invention includes: a base material layer; and a pressure-sensitive adhesive layer, in which the pressure-sensitive adhesive layer contains an ionic liquid or an alkali metal salt.

In a preferred embodiment, the content of the ionic liquid in the pressure-sensitive adhesive layer is 0.1 to 1.5 wt%.

In a preferred embodiment, the content of the alkali metal salt in the pressure-sensitive adhesive layer is 0.04 to 0.3 wt%.

In a preferred embodiment, the pressure-sensitive adhesive layer has a peeling electrification voltage of 0.7 kV or less.

In a preferred embodiment, a wetting rate with respect to an acrylic plate in a surface of the pressure-sensitive adhesive layer, which is brought into contact with an adherend, is 5.0 $cm^2$/sec or more.

In a preferred embodiment, an adhesion with respect to an acrylic plate in a surface of the pressure-sensitive adhesive layer, which is brought into contact with an adherend, is 0.02 to 1.5 N/25 mm.

In a preferred embodiment, the surface protective film of the present invention is used for a surface of a display

member or an image recognition member.

According to another embodiment of the present invention, there is provided a display member. The display member of the present invention is covered with the surface protective film of the present invention.

According to still another embodiment of the present invention, there is provided an image recognition member. The image recognition member of the present invention is covered with the surface protective film of the present invention.

Advantageous Effects of Invention

According to one embodiment of the present invention, it is possible to provide the novel surface protective film that can express sufficiently high antistatic property, can express sufficiently high wettability, and is excellent in reworkability (light peelability), by incorporating the ionic liquid or the alkali metal salt into the pressure-sensitive adhesive.

Brief Description of Drawings

FIG. **1** is a schematic sectional view of a surface protective film according to a preferred embodiment of the present invention.

FIG. **2** is a schematic sectional view illustrating a state before the attachment of an acrylic plate and a test piece in the measurement of a wetting rate.

Description of Embodiments

«A. Surface protective film»

A surface protective film of the present invention includes a base material layer and a pressure-sensitive adhesive layer. FIG. **1** is a schematic sectional view of a surface protective film according to a preferred embodiment of the present invention. A surface protective film **10** includes a base material layer **1** and a pressure-sensitive adhesive layer **2.** The surface protective film of the present invention may further include any appropriate other layer as required (not shown).

The surface of the base material layer **1** on which the pressure-sensitive adhesive layer **2** is not provided can be subjected to a release treatment by adding, for example, a fatty acid amide, a polyethyleneimine, or a long-chain alkyl-based additive to the base material layer, or can be provided with a coat layer formed of any appropriate releasing agent such as a silicone-, long-chain alkyl-, or fluorine-based releasing agent for the purpose of, for example, forming a roll body that can be easily rewound.

A release liner having releasability may be attached to the surface protective film of the present invention.

The thickness of the surface protective film of the present invention can be set to any appropriate thickness depending on applications. The thickness is preferably 10 to 300 μm, more preferably 15 to 250 μm, still more preferably 20 to 200 μm, particularly preferably 25 to 150 μm from the viewpoint of sufficiently expressing the effect of the present invention.

In the surface protective film of the present invention, the pressure-sensitive adhesive layer has a peeling electrification voltage of preferably 0.7 kV or less, more preferably 0.5 kV or less, still more preferably 0.3 kV or less, particularly preferably 0. 1 kV or less, most preferably substantially 0 kV. When the peeling electrification voltage of the pressure-sensitive adhesive layer falls within the range, the surface protective film of the present invention can express sufficiently high antistatic property, can expresssufficiently high wettability,isexcellent in reworkability (light peelability), and is excellent in handleability during work. It should be noted that the measurement of the peeling electrification voltage is described later.

In the surface protective film of the present invention, a wetting rate with respect to an acrylic plate in the surface of the pressure-sensitive adhesive layer, which is brought into contact with an adherend, is preferably 5. 0 $cm^2$/sec or more, more preferably 10 $cm^2$/sec or more, still more preferably 15 $cm^2$/sec or more, particularly preferably 20 $cm^2$/sec or more, most preferably 30 $cm^2$/sec or more. Although an upper limit for the wetting rate is not particularly limited, the wetting rate is preferably 1, 000 $cm^2$/sec or less, more preferably 100 $cm^2$/sec or less in actuality. As long as the wetting rate with respect to the acrylic plate in the surface of the pressure-sensitive adhesive layer, which is brought into contact with the adherend, falls within the range, the surface protective film of the present invention can express sufficiently high wettability. It should be noted that the measurement of the wetting rate is described later.

In the surface protective film of the present invention, an adhesion with respect to an acrylic plate in the surface of the pressure-sensitive adhesive layer, which is brought into contact with an adherend, is preferably 0.02 to 1.5 N/25 mm, more preferably 0.02 to 1.0 N/25 mm, still more preferably 0.02 to 0.5 N/25 mm, particularly preferably 0.02 to 0.4

N/25 mm, most preferably 0.02 to 0.3 N/25 mm. As long as the adhesion with respect to the acrylic plate in the surface of the pressure-sensitive adhesive layer, which is brought into contact with the adherend, falls within the range, the surface protective film of the present invention is excellent in reworkability (light peelability). It should be noted that the measurement of the adhesion is described later.

<A-1. Base material layer>

Any appropriate thickness can be adopted as the thickness of the base material layer depending on applications. The thickness of the base material layer is preferably 5 to 300 μm, more preferably 10 to 250 μm, still more preferably 15 to 200 μm, particularly preferably 20 to 150 μm.

The base material layer may be a single layer, or may be a laminate of two or more layers. The base material layer may be stretched.

Any appropriate material can be adopted as a material for the base material layer depending on applications. Examples thereof include a plastic, paper, a metal film, and a nonwoven fabric. Of those, a plastic is preferred. The materials may be used alone or in combination to construct the base material layer. For example, the layer may be constructed of two or more kinds of plastics.

Examples of the plastic include a polyester-based resin, a polyamide-based resin, and a polyolefin-based resin. Examples of the polyester-based resin include polyethylene terephthalate, polybutylene terephthalate, and polyethylene naphthalate. Examples of the polyolefin-based resin include a homopolymer of an olefin monomer and a copolymer of olefin monomers. Specific examples of the polyolefin-based resin include: homopolypropylene; propylene-based copolymers such as block, random, and graft copolymers each including an ethylene component as a copolymer component; reactor TPO; ethylene-based polymers such as low density, high density, linear low density, and ultra low density polymers; and ethylene-based copolymers such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, and an ethylene-methyl methacrylate copolymer.

The base material layer can contain any appropriate additive as required. Examples of the additive that can be contained in the base material layer include an antioxidant, a UV absorbing agent, a light stabilizer, an antistatic agent, a filler, and a pigment. The kind, number, and amount of the additive that can be contained in the base material layer can be appropriately set depending on purposes. In particular, when the material for the base material layer is a plastic, it is preferred to contain some of the above-mentioned additives for the purpose of, for example, preventing deterioration. From the viewpoint of, for example, the improvement of weather resistance, particularly preferred examples of the additive include an antioxidant, a UV absorbing agent, a light stabilizer, and a filler.

Any appropriate antioxidant can be adopted as the antioxidant. Examples of such antioxidant include a phenol-based antioxidant, a phosphorus-based processing heat stabilizer, a lactone-based processing heat stabilizer, a sulfur-based heat stabilizer, and a phenol-phosphorus-based antioxidant. The content of the antioxidant is preferably 1 part by weight or less, more preferably 0.5 part by weight or less, still more preferably 0.01 to 0.2 part by weight with respect to 100 parts by weight of the base resin of the base material layer (when the base material layer is a blend, the blend is the base resin).

Any appropriate UV absorbing agent can be adopted as the UV absorbing agent. Examples of such UV absorbing agent include a benzotriazole-based UV absorbing agent, a triazine-based UV absorbing agent, and a benzophenone-based UV absorbing agent. The content of the UV absorbing agent is preferably 2 parts by weight or less, more preferably 1 part by weight or less, still more preferably 0.01 to 0.5 part by weight with respect to 100 parts by weight of the base resin that forms the base material layer (when the base material layer is a blend, the blend is the base resin).

Any appropriate light stabilizer can be adopted as the light stabilizer. Examples of such light stabilizer include a hindered amine-based light stabilizer and a benzoate-based light stabilizer. The content of the light stabilizer is preferably 2 parts by weight or less, more preferably 1 part by weight or less, still more preferably 0.01 to 0.5 part by weight with respect to 100 parts by weight of the base resin that forms the base material layer (when the base material layer is a blend, the blend is the base resin).

Any appropriate filler can be adopted as the filler. An example of such filler is an inorganic filler. Specific examples of the inorganic filler include carbon black, titanium oxide, and zinc oxide. The content of the filler is preferably 20 parts by weight or less, more preferably 10 parts by weight or less, still more preferably 0.01 to 10 parts by weight with respect to 100 parts by weight of the base resin that forms the base material layer (when the base material layer is a blend, the blend is the base resin).

Further, a surfactant, an inorganic salt, apolyhydricalcohol, a metal compound, an inorganic antistatic agent such as carbon, and low molecular-weight and high molecular-weight antistatic agents each intended to impart antistatic property are also preferably given as examples of the additive. Of those, a high-molecular weight antistatic agent or carbon is particularly preferred from the viewpoints of contamination and the maintenance of pressure-sensitive adhesiveness.

<A-2. Pressure-sensitive adhesive layer>

The pressure-sensitive adhesive layer is constructed of a pressure-sensitive adhesive. The pressure-sensitive adhesives may be used alone or in combination.

The pressure-sensitive adhesive preferably contains a polymer P as a main component. The content of the polymer P in the pressure-sensitive adhesive is preferably 50 wt% or more, more preferably 80 wt% or more, still more preferably 90 wt% or more, particularly preferably 95 wt% or more.

The polymer P may be a cross-linked polymer.

Any appropriate pressure-sensitive adhesive can be adopted as the pressure-sensitive adhesive for constructing the pressure-sensitive adhesive layer. Examples of such pressure-sensitive adhesive include a silicone-based pressure-sensitive adhesive, a urethane-based pressure-sensitive adhesive, an acrylic pressure-sensitive adhesive, and a rubber-based pressure-sensitive adhesive. Of those, a silicone-based pressure-sensitive adhesive and a urethane-based pressure-sensitive adhesive are preferred as the pressure-sensitive adhesive because the effect of the present invention can be additionally expressed.

Any appropriate silicone-based pressure-sensitive adhesive can be adopted as the silicone-based pressure-sensitive adhesive. A product obtained by blending or agglomerating a silicone resin can be preferably adopted as such silicone-based pressure-sensitive adhesive.

Examples of the silicone-based pressure-sensitive adhesive include an addition reaction-curable silicone-based pressure-sensitive adhesive and a peroxide-curable silicone-based pressure-sensitive adhesive. Of those silicone-based pressure-sensitive adhesives, an addition reaction-curable silicone-based pressure-sensitive adhesive is preferred because a peroxide (such as benzoyl peroxide) is not used and no decomposition product is produced.

For example, when a polyalkylsilicone-based pressure-sensitive adhesive is obtained, a method involving curing a polyalkylhydrogensiloxane composition with a platinum catalyst is generally given as a curing reaction for the addition reaction-curable silicone-based pressure-sensitive adhesive.

Any appropriate urethane-based pressure-sensitive adhesive can be adopted as the urethane-based pressure-sensitive adhesive. As such urethane-based pressure-sensitive adhesive, there is preferably given one formed of a urethane resin obtained by a reaction of a polyol and a polyisocyanate compound. Examples of the polyol include polyether polyol, polyester polyol, polycarbonate polyol, and polycaprolactone polyol. Examples of the polyisocyanate compound include diphenylmethane diisocyanate, tolylene diisocyanate, and hexamethylene diisocyanate.

The pressure-sensitive adhesive layer contains an ionic liquid or an alkali metal salt. The ionic liquids may be used alone or in combination. The alkali metal salts may be used alone or in combination.

The ionic liquid that can be contained in the pressure-sensitive adhesive layer is present as a liquid at normal temperature while the liquid is a salt formed only of ions (specifically a cation and an anion). When the pressure-sensitive adhesive layer contains the ionic liquid, the surface protective film of the present invention can express sufficiently high antistatic property, can express sufficiently high wettability, and is excellent in reworkability (light peelability). Although details about the reason why the use of the ionic liquid provides an excellent antistatic characteristic are unknown, a possible reason is as described below. The ionic liquid is liquid, and hence its molecular motion is easy and the rearrangement of its molecules easily occurs by virtue of the generation of charge. Therefore, even when the pressure-sensitive adhesive contains the ionic liquid, a charge-neutralizing mechanism acts by virtue of the molecular rearrangement and hence an excellent antistatic ability is obtained.

In addition, the addition and dispersion or dissolution of the ionic liquid in the pressure-sensitive adhesive can be easily performed as compared with a solid salt because the liquid is liquid at room temperature. Further, the ionic liquid has the following feature: the liquid has no vapor pressure (is nonvolatile), and hence the liquid does not disappear over time and the antistatic characteristic is continuously obtained. It should be noted that the term "ionic liquid" refers to a molten salt (ionic compound) that is liquid at room temperature (25°C).

The content of the ionic liquid in the pressure-sensitive adhesive layer is preferably 0.1 to 1.5 wt%, more preferably 0.18 to 1. 5 wt%, still more preferably 0.18 to 0.35 wt%. As long as the content of the ionic liquid in the pressure-sensitive adhesive layer falls within the range, the surface protective film of the present invention can additionally express sufficiently high antistatic property and sufficiently high wettability, and is additionally excellent in reworkability (light peelability).

A liquid formed of an organic cation component represented by any one of the following general formulae (A) to (E) and an anion component is preferably used as the ionic liquid. The use of the ionic liquid having any such organic cation component makes the surface protective film of the present invention to be obtained additionally excellent in antistatic ability.

[Chem. 1]

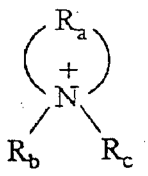

(A)

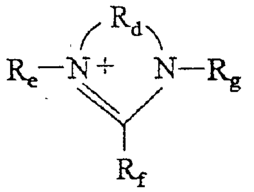

(B)

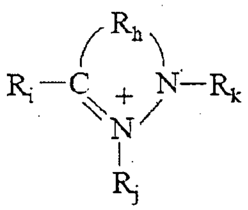

(C)

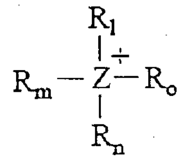

(D)

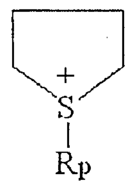

(E)

$R_a$ in the general formula (A) represents a hydrocarbon group having 4 to 20 carbon atoms and may represent a functional group obtained by substituting part of the hydrocarbon group with a heteroatom, and $R_b$ and $R_c$ may be identical to or different from each other, each represent hydrogen or a hydrocarbon group having 1 to 16 carbon atoms, and may each represent a functional group obtained by substituting part of the hydrocarbon group with a heteroatom, provided that when a nitrogen atom in the general formula (A) includes a double bond, $R_c$ is absent.

$R_d$ in the general formula (B) represents a hydrocarbon group having 2 to 20 carbon atoms and may represent a functional group obtained by substituting part of the hydrocarbon group with a heteroatom, and $R_e$, $R_f$, and Rg may be identical to or different from each other, each represent hydrogen or a hydrocarbon group having 1 to 16 carbon atoms, and may each represent a functional group obtained by substituting part of the hydrocarbon group with a heteroatom.

$R_h$ in the general formula (C) represents a hydrocarbon group having 2 to 20 carbon atoms and may represent a functional group obtained by substituting part of the hydrocarbon group with a heteroatom, and $R_i$, $R_j$, and $R_k$ may be identical to or different from each other, each represent hydrogen or a hydrocarbon group having 1 to 16 carbon atoms, and may each represent a functional group obtained by substituting part of the hydrocarbon group with a heteroatom.

Z in the general formula (D) represents a nitrogen, sulfur, or phosphorus atom, and $R_l$, $R_m$, $R_n$, and $R_o$ may be identical to or different from each other, each represent a hydrocarbon group having 1 to 20 carbon atoms, and may each represent a functional group obtained by substituting part of the hydrocarbon group with a heteroatom, provided that when Z in the general formula (D) represents a sulfur atom, $R_o$ is absent.

RP in the general formula (E) represents a hydrocarbon group having 1 to 18 carbon atoms and may represent a functional group obtained by substituting part of the hydrocarbon group with a heteroatom.

Examples of the organic cation component represented by the general formula (A) include a pyridinium cation, a piperidinium cation, a pyrrolidinium cation, a cation having a pyrroline skeleton, a cation having a pyrrole skeleton, and a morpholinium cation.

Specific examples of the organic cation component represented by the general formula (A) include a 1-ethylpyridinium cation, a 1-butylpyridinium cation, a 1-hexylpyridinium cation, a 1-butyl-3-methylpyridinium cation, a 1-butyl-4-methylpyridinium cation, a 1-hexyl-3-methylpyridinium cation, a 1-butyl-3,4-dimethylpyridinium cation, a 1,1-dimethylpyrrolidinium cation,a1-ethyl-1-methylpyrrolidinium cation, a 1-methyl-1-propylpyrrolidinium cation, a 1-methyl-1-butylpyrrolidinium cation, a 1-methyl-1-pentylpyrrolidinium cation, a 1-methyl-1-hexylpyrrolidinium cation, a 1-methyl-1-heptylpyrrolidinium cation, a 1-ethyl-1-propylpyrrolidinium cation, a 1-ethyl-1-butylpyrrolidinium cation, a 1-ethyl-1-pentylpyrrolidinium cation, a 1-ethyl-1-hexylpyrrolidinium cation, a 1-ethyl-1-heptylpyrrolidiniumcation,a1,1-dipropylpyrrolidinium cation, a 1-propyl-1-butylpyrrolidinium cation, a 1,1-dibutylpyrrolidinium cation, a 1-propylpiperidinium cation, a 1-pentylpiperidinium cation, a 1,1-dimethylpiperidinium cation, a 1-methyl-1-ethylpiperidinium cation, a 1-methyl-1-propylpiperidinium cation, a 1-methyl-1-butylpiperidinium cation, a 1-methyl-1-pentylpiperidinium cation, a 1-methyl-1-hexylpiperidinium cation, a 1-methyl-1-heptylpiperidinium cation, a 1-ethyl-1-propylpiperidinium cation, a 1-ethyl-1-butylpiperidinium cation, a 1-ethyl-1-pentylpiperidinium cation, a 1-ethyl-1-hexylpiperidinium cation, a 1-ethyl-1-heptylpiperidinium cation, a 1,1-dipropylpiperidinium cation, a 1-propyl-1-butylpiperidinium cation, a 1,1-dibutylpiperidinium cation, a 2-methyl-1-pyrroline cation, a 1-ethyl-2-phenylindole cation, a 1,2-dimethylindole cation, a 1-ethylcarbazole cation, and an N-ethyl-N-methylmorpholinium cation.

Examples of the organic cation component represented by the general formula (B) include an imidazolium cation, a tetrahydropyrimidinium cation, and a dihydropyrimidinium cation.

Specific examples of the organic cation component represented by the general formula (B) include a1,3-dimethylimidazolium cation, a 1,3-diethylimidazolium cation, a 1-ethyl-3-methylimidazolium cation, a 1-butyl-3-methylimidazolium cation, a 1-hexyl-3-methylimidazoliumcation, a1-octyl-3-methylimidazolium cation, a 1-decyl-3-methylimidazolium cation, a 1-dodecyl-3-methylimidazolium cation, a 1-tetradecyl-3-methylimidazolium cation, a 1,2-dimethyl-3-propylimidazolium cation, a 1-ethyl-2,3-dimethylimidazolium cation, a 1-butyl-2,3-dimethylimidazolium cation, a 1-hexyl-2,3-dimethylimidazolium cation, a 1,3-dimethyl-1,4,5,6-tetrahydropyrimidinium cation, a 1,2,3-trimethyl-1,4,5,6-tetrahydropyrimidinium cation, a 1,2,3,4-tetramethyl-1,4,5,6-tetrahydropyrimidinium cation, a 1,2,3,5-tetramethyl-1,4,5,6-tetrahydropyrimidinium cation, a 1,3-dimethyl-1,4-dihydropyrimidinium cation, a 1,3-dimethyl-1,6-dihydropyrimidinium cation, a 1,2,3-trimethyl-1,4-dihydropyrimidinium cation, a 1,2,3-trimethyl-1,6-dihydropyrimidinium cation, a 1,2,3,4-tetramethyl-1,4-dihydropyrimidinium cation, and a 1,2,3,4-tetramethyl-1,6-dihydropyrimidinium cation.

Examples of the organic cation component represented by the general formula (C) include a pyrazolium cation and a pyrazolinium cation.

Specific examples of the organic cation component represented by the general formula (C) include a 1-methylpyrazolium cation, a 3-methylpyrazolium cation, a1-ethyl-2-methylpyrazolinium cation, a 1-ethyl-2,3,5-trimethylpyrazolium cation, a 1-propyl-2,3,5-trimethylpyrazolium cation, a 1-butyl-2,3,5-trimethylpyrazolium cation, a 1-ethyl-2,3,5-trimethylpyrazolinium cation, a 1-propyl-2,3,5-trimethylpyrazolinium cation, and a 1-butyl-2,3,5-trimethylpyrazolinium cation.

Examples of the organic cation component represented by the general formula (D) include a tetraalkylammonium cation, a trialkylsulfonium cation, a tetraalkylphosphonium cation, and a cation obtained by substituting part of alkyl groups of any of these cations with an alkenyl group, an alkoxyl group, or an epoxy group.

Specific examples of the organic cation component represented by the general formula (D) include a tetramethylammonium cation, a tetraethylammonium cation, a tetrabutylammonium cation, a tetrapentylammonium cation, a tetrahexylammonium cation, a tetraheptylammonium cation, a triethylmethylammonium cation, a tributylethylammonium cation, a trimethyldecylammonium cation, an N,N-diethyl-N-methyl-N-(2-methoxyethyl)ammonium cation, a glycidyltrimethylammonium cation, a trimethylsulfonium cation, a triethylsulfonium cation, a tributylsulfonium cation, a trihexylsulfonium cation, a diethylmethylsulfonium cation, a dibutylethylsulfonium cation, a dimethyldecylsulfonium cation, a tetramethylphosphonium cation, a tetraethylphosphonium cation, a tetrabutylphosphonium cation, a tetrahexylphosphonium cation, a tetraoctylphosphonium cation, a triethylmethylphosphonium cation, a tributylethylphosphonium cation, a trimethyldecylphosphonium cation, and a diallyldimethylammonium cation. Of those, there are given, for example: asymmetric tetraalkylammonium cations, trialkylsulfonium cations, and tetraalkylphosphonium cations such as a triethylmethylammonium cation, a tributylethylammonium cation, a trimethyldecylammonium cation, a diethylmethylsulfonium cation, a dibutylethylsulfonium cation, a dimethyldecylsulfonium cation, a triethylmethylphosphonium cation, a tributylethylphosphonium cation, and a trimethyldecylphosphonium cation; and an N,N-diethyl-N-methyl-N-(2-methoxyethyl)ammonium cation, a glycidyltrimethylammonium cation, a diallyldimethylammonium cation, an N,N-dimethyl-N-ethyl-N-propylammonium cation, an N,N-dimethyl-N-ethyl-N-butylammonium cation, an N,N-dimethyl-N-ethyl-N-pentylammonium cation, an N,N-dimethyl-N-ethyl-N-hexylammonium cation, an N,N-dimethyl-N-ethyl-N-heptylammonium cation, an N,N-dimethyl-N-ethyl-N-nonylamnionium cation, an N,N-dimethyl-N,N-dipropylammonium cation, an N,N-diethyl-N-propyl-N-butylammonium cation, an N,N-dimethyl-N-propyl-N-pentylammonium cation, an N,N-dimethyl-N-propyl-N-hexylammonium cation, an N,N-dimethyl-N-propyl-N-heptylammonium cation, an N,N-dimethyl-N-butyl-N-hexylammonium cation, an N,N-diethyl-N-butyl-N-heptylammonium cation, an N,N-dimethyl-N-pentyl-N-hexylammonium cation, an N,N-dimethyl-N,N-dihexylammonium cation, a trimethylheptylammonium cation, an N,N-diethyl-N-methyl-N-propylammonium cation, an N,N-diethyl-N-methyl-N-pentylammonium cation, an N,N-diethyl-N-methyl-N-heptylammonium cation, an N,N-diethyl-N-propyl-N-pentylammonium cation, a triethylpropylammonium cation, a triethylpentylammonium cation, a triethylheptylammonium cation, an N,N-dipropyl-N-methyl-N-ethylammonium cation, an N,N-dipropyl-N-methyl-N-pentylammonium cation, an N,N-dipropyl-N-butyl-N-hexylammonium cation, an N,N-dipropyl-N,N-dihexylammonium cation, an N,N-dibutyl-N-methyl-N-pentylammonium cation, an N,N-dibutyl-N-methyl-N-hexylammonium cation, a trioctylmethylammonium cation, and an N-methyl-N-ethyl-N-propyl-N-pentylammonium cation.

An example of the organic cation component represented by the general formula (E) is a sulfonium cation. In addition, specific examples of $R_p$ in the general formula (E) include a methyl group, an ethyl group, a propyl group, a butyl group, a hexyl group, an octyl group, a nonyl group, a decyl group, a dodecyl group, a tridecyl group, a tetradecyl group, and an octadecyl group.

On the other hand, the anion component is not particularly limited as long as the anion component forms an ionic liquid when used in combination with the cation component, and examples thereof include $Cl^-$, $Br^-$, $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $(CF_3SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, $(CF_3SO_2)$ $(CF_3CO)N^-$, $C_9H_{19}COO^-$, $(CH_3)_2PO_4^-$, $(C_2H_5)_2PO_4^-$, $C_2H_5OSO_3^-$, $C_6H_{13}OSO_3^-$, $C_8H_{17}OSO_3^-$, $CH_3$ $(OC_2H_4)$ $_2OSO_3^-$, $C_6H_4$ $(CH_3)$ $SO_3^-$, $(C_2F_5)$ $_3PF_3^-$, $CH_3CH$ $(OH)$ $COO^-$, and $(FSO_2)_2N^-$.

In addition, an anion represented by the following general formula (F) can be used as the anion component.

[Chem. 2]

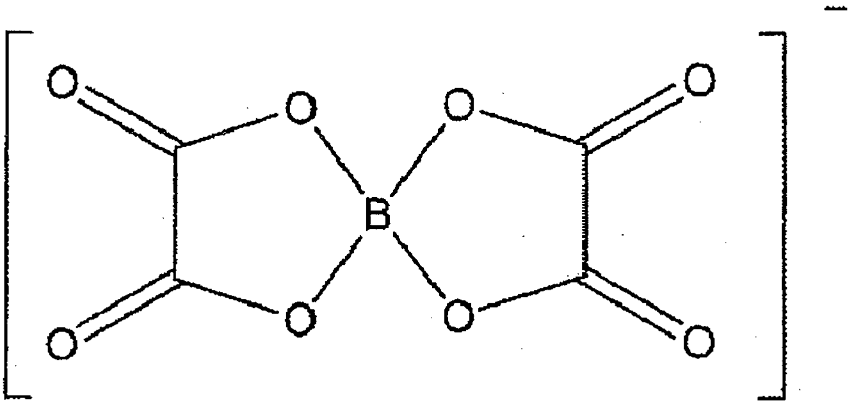

(F)

In addition, a preferred example of the anion component is a fluorine atom-containing anion component because an ionic liquid having a low melting point can be obtained.

As a specific example of the ionic liquid in the present invention, there can be used one appropriately selected from combinations of the organic cation components and the anion components. Examples of such ionic liquid include 1-butylpyridinium tetrafluoroborate, 1-butylpyridinium haxafluorophosphate, 1-butyl-3-methylpyridinium tetrafluoroborate, 1-butyl-3-methylpyridinium trifluoromethanesulfonate, 1-butyl-3-methylpyridinium bis(trifluoromethanesulfonyl)imide, 1-butyl-3-methylpyridinium bis(pentafluoroethanesulfonyl)imide, 1-hexylpyridinium tetrafluoroborate, 1,1-dimethylpyrrolidinium bis(trifluoromethanesulfonyl)imide, 1-methyl-1-ethylpyrrolidinium bis(trifluoromethanesulfonyl)imide, 1-methyl-1-propylpyrrolidinium bis(trifluoromethanesulfonyl)imide, 1-methyl-1-butylpyrrolidinium bis(trifluoromethanesulfonyl)imide, 1-methyl-1-pentylpyrrolidinium bis(trifluoromethanesulfonyl)imide, 1-methyl-1-hexylpyrrolidinium bis(trifluoromethanesulfonyl)imide, 1-methyl-1-heptylpyrrolidinium bis(trifluoromethanesulfonyl)imide, 1-ethyl-1-propylpyrrolidinium bis(trifluoromethanesulfonyl)imide, 1-ethyl-1-butylpyrrolidinium bis(trifluoromethanesulfonyl)imide, 1-ethyl-1-pentylpyrrolidinium bis(trifluoromethanesulfonyl)imide, 1-ethyl-1-hexylpyrrolidinium bis(trifluoromethanesulfonyl)imide, 1-ethyl-1-heptylpyrrolidinium bis(trifluoromethanesulfonyl)imide, 1,1-dipropylpyrrolidinium bis(trifluoromethanesulfonyl)imide, 1-propyl-1-butylpyrrolidinium bis(trifluoromethanesulfonyl)imide, 1,1-dibutylpyrrolidinium bis(trifluoromethanesulfonyl)imide, 1-propylpiperidinium bis(trifluoromethanesulfonyl)imide, 1-pentylpiperidinium bis(trifluoromethanesulfonyl)imide, 1,1-dimethylpiperidinium bis(trifluoromethanesulfonyl)imide, 1-methyl-1-ethylpiperidinium bis(trifluoromethanesulfonyl)imide, 1-methyl-1-propylpiperidinium bis(trifluoromethanesulfonyl)imide, 1-methyl-1-butylpiperidinium bis(trifluoromethanesulfonyl)imide, 1-methyl-1-pentylpiperidinium bis(trifluoromethanesulfonyl)imide, 1-methyl-1-hexylpiperidinium bis(trifluoromethanesulfonyl)imide, 1-methyl-1-hepthylpiperidinium bis(trifluoromethanesulfonyl)imide, 1-ethyl-1-propylpiperidinium bis(trifluoromethanesulfonyl)imide, 1-ethyl-1-butylpiperidinium bis(trifluoromethanesulfonyl)imide, 1-ethyl-1-pentylpiperidinium bis(trifluoromethanesulfonyl)imide, 1-ethyl-1-hexylpiperidinium bis(trifluoromethanesulfonyl)imide, 1-ethyl-1-hepthylpiperidinium bis(trifluoromethanesulfonyl)imide, 1,1-dipropylpiperidinium bis(trifluoromethanesulfonyl)imide, 1-propyl-1-butylpiperidinium bis(trifluoromethanesulfonyl)imide, 1,1-dibutylpiperidinium bis(trifluoromethanesulfonyl)imide, 1,1-dimethylpyrolidinium bis(pentafluoroethanesulfonyl)imide, 1-methyl-1-ethylpyrolidinium bis(pentafluoroethanesulfonyl)imide, 1-methyl-1-propylpyrolidinium bis(pentafluoroethanesulfonyl)imide, 1-methyl-1-butylpyrolidinium bis(pentafluoroethanesulfonyl)imide, 1-methyl-1-pentylpyrolidinium bis(pentafluoroethanesulfonyl)imide, 1-methyl-1-hexylpyrolidinium bis(pentafluoroethanesulfonyl)imide, 1-methyl-1-hepthylpyrolidinium bis(pentafluoroethanesulfonyl)imide, 1-ethyl-1-propylpyrolidinium bis(pentafluoroethanesulfonyl)imide, 1-ethyl-1-butylpyrolidinium bis(pentafluoroethanesulfonyl)imide, 1-ethyl-1-pentylpyrolidinium bis(pentafluoroethanesulfonyl)imide, 1-ethyl-1-hexylpyrolidinium bis(pentafluoroethanesulfonyl)imide, 1-ethyl-1-hepthylpyrolidinium bis(pentafluoroethanesulfonyl)imide, 1,1-dipropylpyrolidinium bis(pentafluoroethanesulfonyl)imide, 1-propyl-1-butylpyrolidinium bis(pentafluoroethanesulfonyl)imide, 1,1-dibutylpyrolidinium bis(pentafluoroethanesulfonyl)imide, 1-propylpiperidinium bis(pentafluoroethanesulfonyl)imide, 1-pentylpiperidinium bis(pentafluoroethanesulfonyl)imide, 1,1-dimethylpiperidinium bis(pentafluoroethanesulfonyl)imide, 1-methyl-1-ethylpiperidinium bis(pentafluoroethanesulfonyl)imide, 1-methyl-1-propylpiperidinium bis(pentafluoroethanesulfonyl)imide, 1-methyl-1-butylpiperidinium bis(pentafluoroethanesulfonyl)imide, 1-methyl-1-pentylpiperidinium bis(pentafluoroethanesulfonyl)imide, 1-methyl-1-hexylpiperidinium bis(pentafluoroethanesulfonyl)imide, 1-methyl-1-hepthylpiperidinium bis(pentafluoroethanesulfonyl)imide, 1-ethyl-1-propylpiperidinium bis(pentafluoroethanesulfonyl)imide, 1-ethyl-1-butylpiperidinium bis(pentafluoroethanesulfonyl)imide, 1-ethyl-1-pentylpiperidinium bis(pentafluoroethanesulfonyl)imide, 1-ethyl-1-hexylpiperidinium bis(pentafluoroethanesulfonyl)imide, 1-ethyl-1-hepthylpiperidinium bis(pentafluoroethanesulfonyl)imide, 1,1-dipropylpiperidinium bis(pentafluoroethanesulfonyl)imide, 1-propyl-1-butylpiperidinium bis(pentafluoroethanesulfonyl)imide, 1,1-dibutylpiperidinium bis(pentafluoroethanesulfonyl)imide, 2-methyl-1-pyrroline tetrafluoroborate, 1-ethyl-2-phenylindole tetrafluoroborate, 1,2-dimethylindole tetrafluoroborate, 1-ethylcarbazole tetrafluoroborate, 1-ethyl-2-methylimidazolium tetrafluoroborate, 1-ethyl-2-methylimidazolium acetate, 1-ethyl-2-methylimidazolium trifluoroacetate, 1-ethyl-2-methylimidazolium heptafluorobutyrate, 1-ethyl-2-methylimidazolium trifluoromethanesulfonate, 1-ethyl-2-methylimidazolium perfluorobutanesulfonate, 1-ethyl-2-methylimidazolium dicyanamide, 1-ethyl-2-methylimidazolium bis(trifluoromethanesulfonyl)imide, 1-ethyl-2-methylimidazolium bis(pentafluoroethanesulfonyl)imide, 1-ethyl-2-methylimidazolium tris(trifluoromethanesulfonyl)methide, 1-butyl-2-methylimidazolium tetrafluoroborate, 1-butyl-2-methylimidazolium hexafluorophosphate, 1-butyl-2-methylimidazolium trifluoroacetate, 1-butyl-2-methylimidazolium heptafluorobutyrate, 1-butyl-2-methylimidazolium trifluoromethanesulfonate, 1-butyl-2-methylimidazolium perfluorobutanesulfonate, 1-butyl-2-methylimidazolium bis(trifluoromethanesulfonyl)imide, 1-hexyl-2-methylimidazolium bromide, 1-hexyl-2-methylimidazolium chloride, 1-hexyl-2-methylimidazolium tetrafluoroborate, 1-hexyl-2-methylimidazolium hexafluorophosphate, 1-hexyl-2-methylimidazolium trifluoromethanesulfonate, 1-octyl-2-methylimidazolium tetrafluoroborate, 1-octyl-2-methylimidazolium hexafluorophosphate, 1-hexyl-2,2-dimethylimidazolium tetrafluoroborate, 1,2-dimethyl-2-propylimidazolium bis(trifluoromethanesulfonyl)imide, a tetrapentylammonium cation, a tetrahexylammonium cation, a tetrahepthylammonium cation, a tetraoctylphosphonium cation, a 1-methylpyrazolium tetrafluoroborate, 2-methylpyrazolium tetrafluoroborate, 1-ethyl-2,3,5-trimethylpyrazolium bis(trifluoromethanesulfonyl)imide, 1-propyl-2,3,5-trimethylpyrazolium bis(trifluoromethanesulfonyl)imide, 1-butyl-2,3,5-trimethylpyrazolium bis(trifluoromethanesulfonyl)imide, 1-ethyl-2,3,5-trimethylpyrazolium bis(pentafluoroethanesulfonyl)imide, 1-propyl-2,3,5-trimethylpyrazolium bis(pentafluoroethanesulfonyl)imide, 1-butyl-2,3,5-trimethylpyrazolium bis(pentafluoroethanesulfonyl)imide, 1-ethyl-2,3,5-trimethylpyrazolium bis(trifluoromethanesulfonyl)trifluoroacetamide, 1-propyl-2,3,5-trimethylpyrazolium bis(trifluoromethanesulfonyl)trifluoroacetamide, 1-butyl-2,3,5-trimethylpyrazolium bis(trifluoromethanesulfonyl)trifluoroacetamide, 1-ethyl-2,3,5-trimethylpyrazolinium bis(trifluoromethanesulfonyl)imide, 1-propyl-2,3,5-trimethylpyrazolinium bis(trifluoromethanesulfonyl)imide, 1-butyl-2,3,5-trimethylpyrazolinium bis(trifluoromethanesulfonyl)imide, 1-ethyl-2,3,5-trimethylpyrazolinium bis(pentafluoroethanesulfonyl)imide, 1-propyl-2,3,5-trimethylpyrazolinium bis(pentafluoroethanesulfonyl)imide, 1-butyl-2,3,5-trimethylpyrazolinium bis(pentafluoroethanesulfonyl)imide, 1-ethyl-2,3,5-trimethylpyrazolinium bis(trifluoromethanesulfonyl)trifluoroacetamide, 1-propyl-2,3,5-trimethylpyrazolinium bis(trifluoromethanesulfonyl)trifluoroacetamide, 1-butyl-2,3,5-trimethylpyrazolinium bis(trifluoromethanesulfonyl)trifluoroacetamide, tetrapentylammonium trifluoromethanesulfonate, tetrapentylammonium bis(trifluoromethanesulfonyl)imide, tetrahexylammonium trifluoromethanesulfonate, tetrahexylammonium bis(trifluoromethanesulfonyl)imide, tetrahepthylammonium trifluoromethanesulfonate, tetrahepthylammonium bis(trifluoromethanesulfonyl)imide, diallyldimethylammonium tetrafluoroborate, diallyldimethylammonium trifluoromethanesulfonate, diallyldimethylammonium bis(trifluoromethanesulfonyl)imide, diallyldimethylammonium bis(pentafluoroethanesulfonyl)imide, N,N-diethyl-N-methyl-N-(2-methoxyethyl)ammonium tetrafluoroborate, N,N-diethyl-N-methyl-N-(2-methoxyethyl)ammonium trifluoromethanesulfonate, N,N-diethyl-N-methyl-N-(2-methoxyethyl)ammonium bis(trifluoromethanesulfonyl)imide, N,N-diethyl-N-methyl-N-(2-methoxyethyl)ammonium bis(pentafluoroethanesulfonyl)imide, glycidyltrimethylammonium trifluoromethanesulfonate, glycidyltrimethylammonium bis(trifluoromethanesulfonyl)imide, glycidyltrimethylammonium bis(pentafluoroethanesulfonyl)imide, tetraoctylphosphonium trifluoromethanesulfonate, tetraoctylphosphonium bis(trifluoromethanesulfonyl)imide, N,N-dimethyl-N-ethyl-N-propylammonium bis(trifluoromethanesulfonyl)imide, N,N-dimethyl-N-ethyl-N-butylammonium bis(trifluoromethanesulfonyl)imide, N,N-dimethyl-N-ethyl-N-pentylammonium bis(trifluoromethanesulfonyl)imide, N,N-dimethyl-N-ethyl-N-hexylammonium bis(trifluoromethanesulfonyl)imide, N,N-dimethyl-N-ethyl-N-hepthylammonium bis(trifluoromethanesulfonyl)imide, N,N-dimethyl-N-ethyl-N-nonylammonium bis(trifluoromethanesulfonyl)imide, N,N-dimethyl-N,N-dipropylammonium bis(trifluoromethanesulfonyl)imide, N,N-dimethyl-N-propyl-N-butylammonium bis(trifluoromethanesulfonyl)imide, N,N-dimethyl-N-propyl-N-pentylammonium bis(trifluoromethanesulfonyl)imide, N,N-dimethyl-N-propyl-N-hexylammonium bis(trifluoromethanesulfonyl)imide, N,N-dimethyl-N-propyl-N-hepthylammonium bis(trifluoromethanesulfonyl)imide, N,N-dimethyl-N-butyl-N-hexylammonium bis(trifluoromethanesulfonyl)imide, N,N-dimethyl-N-butyl-N-hepthylammonium bis(trifluoromethanesulfonyl)imide, N,N-dimethyl-N-pentyl-N-hexylammonium bis(trifluoromethanesulfonyl)imide, N,N-dimethyl-N,N-dihexylammonium bis(trifluoromethanesulfonyl)imide, trimethylhepthylammonium bis(trifluoromethanesulfonyl)imide, N,N-diethyl-N-methyl-N-propylammonium bis(trifluoromethanesulfonyl)imide, N,N-diethyl-N-methyl-N-pentylammonium bis(trifluoromethanesulfonyl)imide, N,N-diethyl-N-methyl-N-hepthylammonium bis(trifluoromethanesulfonyl)imide, N,N-diethyl-N-propyl-N-pentylammonium bis(trifluoromethanesulfonyl)imide, triethylpropylammonium bis(trifluoromethanesulfonyl)imide, triethylpentylammonium bis(trifluoromethanesulfonyl)imide, triethylhepthylammonium bis(trifluoromethanesulfonyl)imide, N,N-dipropyl-N-methyl-N-ethylammonium bis(trifluoromethanesulfonyl)imide, N,N-dipropyl-N-methyl-N-pentylammonium bis(trifluoromethanesulfonyl)imide, N,N-dipropyl-N-butyl-N-hexylammonium bis(trifluoromethanesulfonyl)imide, N,N-dipropyl-N,N-dihexylammonium bis(trifluoromethanesulfonyl)imide, N,N-dibutyl-N-methyl-N-pentylammonium bis(trifluoromethanesulfonyl)imide, N,N-dibutyl-N-methyl-N-hexylammonium bis(trifluoromethanesulfonyl)imide, trioctylmethylammonium bis(trifluoromethanesulfonyl)imide, N-methyl-N-ethyl-N-propyl-N-pentylammonium bis(trifluoromethanesulfonyl)imide, 1-butylpyridinium (trifluoromethanesulfonyl)trifluoroacetamide, 1-butyl-3-methylpyridinium (trifluoromethanesulfonyl)trifluoroacetamide, 1-ethyl-3-methylimidazolium (trifluoromethanesulfonyl)trifluoroacetamide, N-ethyl-N-methylmorpholinium thiocyanate, and 4-ethyl-4-methylmorpholinium methylcarbonate.

The pressure-sensitive adhesive layer can contain the alkali metal salt. When the pressure-sensitive adhesive layer contains the alkali metal salt, the surface protective film of the present invention can express sufficiently high antistatic property, can express sufficiently high wettability, and is excellent in reworkability (light peelability).

The content of the alkali metal salt in the pressure-sensitive adhesive layer is preferably 0.04 to 0. 3 wt%. As long as the content of the alkali metal salt in the pressure-sensitive adhesive layer falls within the range, the surface protective film of the present invention can additionally express sufficiently high antistatic property and sufficiently high wettability, and is additionally excellent in reworkability (light peelability).

Any appropriate alkali metal salt can be adopted as the alkali metal salt. Specific examples thereof include metal salts each including lithium, sodium, or potassium. Specifically, there may be suitably used a matal salt formed of any one of the cations consisting of $Li^+$, $Na^+$, and $K^+$ and any one of the anions consisting of $Cl^-$, $Br^-$, $I^-$, $BF_4^-$, $PF_6^-$, $SCN^-$, $ClO_4^-$, $C_nF_{n+1}SO_3^-$, $(CF_3SO_2)_2N^-$, $(C_2F_5SO_2)_2N^-$, $(SO_2F)_2N^-$, $(CF_3SO_2)_3C^-$, and a boron-containing compound. Of those, lithium salts such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$, and $Li(CF_3SO_2)_3C$ are particularly preferably used. Those alkali metal salts may be used alone or in combination.

Any appropriate additive can be contained in the pressure-sensitive adhesive for constructing the pressure-sensitive adhesive layer. Examples of such additive include a softener, a tackifier, a surface lubricating agent, a leveling agent, an antioxidant, a corrosion inhibitor, a light stabilizer, a UV absorbing agent, a heat stabilizer, a polymerization inhibitor, a silane coupling agent, a lubricant, an inorganic or organic filler, metal powder, a pigment, and a solvent. In addition, an alkylene oxide group-containing compound may be added. The alkylene oxide group-containing compound can interact with the alkali metal salt to efficiently express peeling electrification property, though the reason for the foregoing is unknown. Examples of the alkylene oxide group-containing compound include a polyether polyol compound and a derivative thereof, and other polyether-modified compounds. In addition, in the present invention, the pressure-sensitive adhesive for constructing the pressure-sensitive adhesive layer is preferably free of any plasticizer. This is because the use of the pressure-sensitive adhesive layer to which a plasticizer has been added may contaminate an adherend owing to the plasticizer, though the use improves the wettability.

The pressure-sensitive adhesive for constructing the pressure-sensitive adhesive layer can be produced by any appropriate method. The pressure-sensitive adhesive for constructing the pressure-sensitive adhesive layer can be produced, for example, as described below. While a polymerization method to be generally employed as an approach to synthesizing a polymer, such as solution polymerization, emulsion polymerization, bulk polymerization, suspension polymerization,or polymerization with ultraviolet light (UV) is employed, any appropriate cross-linking method is adopted, and any appropriate additive is used as required.

The surface protective film of the present invention can be used in any appropriate application. The surface protective film of the present invention is preferably used for the surface of a display member or an image recognition member.

A display member covered with the surface protective film of the present invention can be subjected to manual attachment and manual peeling any number of times.

An image recognitionmember coveredwith the surface protective film of the present invention can be subjected to manual attachment and manual peeling any number of times.

«B. Method of producing surface protective film»

The surface protective film of the present invention can be produced by any appropriate method. The production can be performed in conformity with, as such production method, any appropriate production method such as:

(1) a method involving applying a solution of the pressure-sensitive adhesive in a solvent or a hot-melt liquid thereof to the base material;
(2) a method involving transferring the pressure-sensitive adhesive layer applied and formed in a separator fashion in conformity with the foregoing;
(3) a method involving extruding a material for forming the pressure-sensitive adhesive layer onto the base material to form and apply the layer;
(4) a method involving extruding the base material and the pressure-sensitive adhesive layer in two layers or a plurality of layers;
(5) a method involving laminating a single layer of the pressure-sensitive adhesive layer onto the base material or a method involving laminating two layers of a laminate layer and the pressure-sensitive adhesive layer; or

(6) a method involving laminating two layers, or a plurality of layers, of the pressure-sensitive adhesive layer and a material for forming the base material such as a film or a laminate layer.

Examples of the application method include methods each involving the use of a bar coater, a gravure coater, a spin coater, a roll coater, a knife coater, or an applicator.
The method involving applying a solution of the pressure-sensitive adhesive in a solvent or a hot-melt liquid thereof to the base material is particularly preferred as the method of producing the surface protective film of the present invention in terms of productivity and a cost.

Examples

Hereinafter, the present invention is described specifically by way of Examples. However, the present invention is by no means limited to Examples below. It should be noted that test and evaluation methods in Examples and the like are as described below.

(Measurement of peeling electrification voltage)

A surface protective film was cut into a size of a width of 70 mm and a length of 130 mm, and its separator was peeled off. After that, the resultant film was pressure-bonded to a surface of an acrylic panel (manufactured by MITSUBISHI RAYON CO., LTD., ACRYLITE) having a thickness of 1 mm, a width of 70 mm, and a length of 100 mm that had been subjected to an antistatic treatment in advance with a hand roller in such a manner that one end portion thereof protruded by 30 mm. After the resultant had been left to stand under an environment of 23°C×25%RH for 1 day, the one end portion protruding by 30 mm was fixed to an automatic winder, and then peeling was performed under the conditions of a peel angel of 150° and a peel rate of 10 m/min. The peeled surface protective film was mounted on a sample fixing stand, and the potential of its pressure-sensitive adhesive layer surface was measured with a potential meter (manufactured by KASUGA DENKI, Inc., KSD-0103). The measurement was carried out under an environment of 23°C×25%RH.

(Measurement of wetting rate)

Test piece: 2.5 cmx8.0 cm
Adherend: An acrylic plate (manufactured by MITSUBISHI RAYON CO., LTD., trade name: ACRYLITE L)
Number of times of measurement:

3 ((The average of 3 independently measured values was adopted.)

Measurement environment:

A class-10, 000 clean room (having a temperature of 23°C and a humidity of 50%RH)

(1) FIG. 2 illustrates a state before the attachment of the acrylic plate and the test piece in the measurement of a wetting rate. As illustrated in FIG. 2, an angle of 20 to 30° is formed in a state where part of the pressure-sensitive adhesive layer surface of the test piece (surface protective film) is brought into contact with the acrylic plate.

(2) Next, a hand is freed from the test piece so that the test piece may be attached to the acrylic plate with its own weight alone. Simultaneously with the freeing of the hand, the manner in which the pressure-sensitive adhesive layer of the test piece is wet and spread over the acrylic plate is recorded with a digital camera at an interval of 0.2 second.

(3) The time point at which the pressure-sensitive adhesive layer surface except the site brought into contact with the acrylic plate in the section (1) starts to be brought into contact with the acrylic plate is defined as an initial point. The manner in which the pressure-sensitive adhesive layer is wet and spread is analyzed with image analysis software "Image J" every 0.2 second from the initial point.

(4) A wetting rate is calculated by using the following calculation equation.

$$\text{Wetting rate (cm}^2\text{/sec)} = (\text{wetted area 0.2 second after initial point (cm}^2) - \text{wetted area at initial point (cm}^2))/0.2\ (\text{sec})$$

(Measurement of adhesion)

A surface protective film was cut into a piece measuring 25 mm wide by 150 mm long and the piece was defined as a sample for an evaluation.

The pressure-sensitive adhesive layer surface of the sample for an evaluation was attached to an acrylic plate (manufactured by MITSUBISHI RAYON CO., LTD., trade name: ACRYLITE L) under an atmosphere having a temperature of 23°C and a humidity of 50%RH by reciprocating a 2-kg roller once. After having been guarded at 23°C for 30 minutes, the sample was measured for its adhesion with a universal tensile tester (manufactured by Minebea Co., Ltd., product name: TCM-1kNB) at a peel angle of 180° and a tension speed of 10 m/min.

(Example 1)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.1 part by weight of an "EMI-EF11" (manufactured by Mitsubishi Materials Corporation) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (1).

Table 1 shows the results.

(Example 2)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufacturedbyShin-EtsuChemicalCo., Ltd.) as a platinum catalyst, 0.2 part by weight of an "EMI-EF11" (manufactured by Mitsubishi Materials Corporation) as an ionic liquid, and 100 parts by weight of toluene as a solvent were compounded, and then the mixture was stirredwith a disper to produce asilicone-based pressure-sensitive adhesive composition.

The resultant silicone-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (2).

Table 1 shows the results.

(Example 3)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co., Ltd.) as a platinum catalyst, 0.9 part by weight of an "EMI-EF11" (manufactured by Mitsubishi Materials Corporation) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of

150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (3).

Table 1 shows the results.

(Example 4)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufacturedby Shin-Etsu Chemical Co., Ltd.) as a platinum catalyst, 0.1 part by weight of an "EtMePy-EF11" (manufactured by Mitsubishi Materials Corporation) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (4).

Table 1 shows the results.

(Example 5)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co., Ltd.) as a platinum catalyst, and 0. 2 part by weight of an "EtMePy-EF11" (manufacturedbyMitsubishi Materials Corporation) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (5).

Table 1 shows the results.

(Example 6)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.9 part by weight of an "EtMePy-EF11" (manufactured by Mitsubishi Materials Corporation) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (6).

Table 1 shows the results.

(Example 7)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.1 part by weight of a "CIL-312" (manufactured by Japan Carlit Co., Ltd.) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (7).

Table 1 shows the results.

(Example 8)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufacturedby Shin-Etsu Chemical Co., Ltd.) as a platinum catalyst, 0.2 part by weight of a "CIL-312" (manufactured by Japan Carlit Co., Ltd.) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (8).

Table 1 shows the results.

(Example 9)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.9 part by weight of a "CIL-312" (manufactured by Japan Carlit Co., Ltd.) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (9).

Table 1 shows the results.

(Example 10)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.1 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (10).

Table 1 shows the results.

(Example 11)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co., Ltd.) as a platinum catalyst, 0.2 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a silicone-based pressure-sensitive adhesive composition.
The resultant silicone-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (11).
Table 1 shows the results.

(Example 12)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, 0.9 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a silicone-based pressure-sensitive adhesive composition.
The resultant silicone-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (12).
Table 1 shows the results.

(Example 13)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part byweight of dibutyltin dilaurate (1-wt% ethyl acetate solution) as a cross-linking catalyst, 0.1 part by weight of an "EMI-EF11" (manufactured by Mitsubishi Materials Corporation) as an ionic liquid, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (13).
Table 1 shows the results.

(Example 14)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part byweight of dibutyltin dilaurate (1-wt% ethyl acetate solution) as a cross-linking catalyst, 0.2 part by weight of an "EMI-EF11" (manufactured by Mitsubishi Materials Corporation) as an ionic liquid, and 100 parts by weight of toluene as a solvent were compounded, and then

the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (14).

Table 1 shows the results.

(Example 15)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part byweight of dibutyltin dilaurate (1-wt% ethyl acetate solution) as a cross-linking catalyst, 0.9 part by weight of an "EMI-EF11" (manufactured by Mitsubishi Materials Corporation) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (15).

Table 1 shows the results.

(Example 16)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0 . 015 part byweight of dibutyltin dilaurate (1-wt% ethyl acetate solution) as a cross-linking catalyst, 0.1 part by weight of a "CIL-312" (manufactured by Japan Carlit Co., Ltd.) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (16).

Table 1 shows the results.

(Example 17)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.2 part by weight of a "CIL-312" (manufactured by Japan Carlit Co., Ltd.) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (17).
Table 1 shows the results.

(Example 18)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.9 part by weight of a "CIL-312" (manufactured by Japan Carlit Co., Ltd.) as an ionic liquid, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to abase material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (18).
Table 1 shows the results.

(Example 19)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0. 015 part byweight of dibutyltin dilaurate (1-wt% ethyl acetate solution) as a cross-linking catalyst, 0.1 part by weight of an "EtMePy-EF11" (manufactured by Mitsubishi Materials Corporation) as an ionic liquid, and 100 parts by weight of toluene as a solvent were compounded, and then the mixture was stirred with a disper toproduce a urethane-based pressure-sensitive adhesive composition.
The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (19).
Table 1 shows the results.

(Example 20)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0.015 part byweight of dibutyltin dilaurate (1-wt% ethyl acetate solution) as a cross-linking catalyst, 0.2 part by weight of an "EtMePy-EF11" (manufactured by Mitsubishi Materials Corporation) as an ionic liquid, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (20).
Table 1 shows the results.

(Example 21)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0 . 015 part by weight of dibutyltin dilaurate (1-wt% ethyl acetate solution) as a cross-linking catalyst, 0.9 part by weight of an "EtMePy-EF11" (manufactured by Mitsubishi Materials Corporation) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (21).

Table 1 shows the results.

(Example 22)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0.015 part by weight of dibutyltin dilaurate (1-wt% ethyl acetate solution) as a cross-linking catalyst, 0.1 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (22).

Table 1 shows the results.

(Example 23)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0.015 part by weight of dibutyltin dilaurate (1-wt% ethyl acetate solution) as a cross-linking catalyst, 0.2 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (23).

Table 1 shows the results.

(Example 24)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.9 part by weight of an "IL-220" (manufactured by Dai-ichi Kogyo Seiyaku Co., Ltd.) as an ionic liquid, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of

150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (24).

Table 1 shows the results.

(Example 25)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part byweight of dibutyltin dilaurate (1-wt% ethyl acetate solution) as a cross-linking catalyst, 0.05 part by weight of $LiN(CF_3SO_2)_2$ (manufactured by Tokyo Chemical Industry Co., Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (25).

Table 2 shows the results.

(Example 26)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0. 10 part by weight of $LiN(CF_3SO_2)_2$ (manufactured by Tokyo Chemical Industry Co., Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (26).

Table 2 shows the results.

(Example 27)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0.015 part by weight of dibutyltin dilaurate (1-wt% ethyl acetate solution) as a cross-linking catalyst, 0.30 part by weight of $LiN(CF_3SO_2)_2$ (manufactured by Tokyo Chemical Industry Co. , Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (27).

Table 2 shows the results.

(Example 28)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.05 part by weight of $LiClO_4$ (manufactured by Wako Pure Chemical Industries, Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (28).

Table 2 shows the results.

(Example 29)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.10 part by weight of $LiClO_4$ (manufactured by Wako Pure Chemical Industries, Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (29).

Table 2 shows the results.

(Example 30)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co., Ltd.) as a cross-linking agent, 0.015 part by weight of dibutyltin dilaurate (1-wt% ethyl acetate solution) as a cross-linking catalyst, 0.30 part by weight of $LiClO_4$ (manufactured by Wako Pure Chemical Industries, Ltd.) as an alkali metal salt, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (30).

Table 2 shows the results.

(Example 31)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.05 part by weight of $LiCF_3SO_3$ (manufactured by Tokyo Chemical Industry Co. , Ltd.) as an alkali metal salt, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (31).
Table 2 shows the results.

(Example 32)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part byweight of dibutyltin dilaurate (1-wt% ethyl acetate solution) as a cross-linking catalyst, 0.10 part by weight of $LiCF_3SO_3$ (manufactured by Tokyo Chemical Industry Co. , Ltd.) as an alkali metal salt, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (32).
Table 2 shows the results.

(Example 33)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, 0.30 part by weight of $LiCF_3SO_3$ (manufactured by Tokyo Chemical Industry Co. , Ltd.) as an alkali metal salt, and 100 parts by weight of toluene as a solvent were compounded, and then the mixture was stirred with a disper to produce a urethane-based pressure-sensitive adhesive composition.
The resultant urethane-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.
Next, the silicone-treated surface of a base material formed of a polyester resin having a thickness of 25 μm one surface of which had been subjected to a fluorosilicone treatment was attached to the surface of the pressure-sensitive adhesive layer, and the resultant was aged at an aging temperature of 50°C for 2 days to produce a surface protective film (33).
Table 2 shows the results.

(Comparative Example 1)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, and 100 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subj ected to a fluorosilicone treatment was attached to the surface of the pressure-sensitive adhesive layer to produce a surface protective film (C1).

Table 1 shows the results.

(Comparative Example 2)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, and 100 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (C2).

Table 1 and Table 2 show the results.

[Table 1]

| Sample | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Peeling electrification voltage [kV] | -0.3 | -0.4 | -0.1 | 0.0 | 0.0 | 0.0 | -0.3 | -0.1 | -0.3 | 0.0 | 0.0 | 0.0 |
| Wetting rate [cm2/sec] | 41.6 | 26.3 | 15.0 | 27.3 | 39.8 | 23.2 | 12.2 | 10.5 | 20.0 | 12.6 | 14.3 | 14.8 |
| Adhesion [N/25 mm] | 0.32 | 0.33 | 0.38 | 0.30 | 0.20 | 0.38 | 0.32 | 0.30 | 0.25 | 0.20 | 0.20 | 0.16 |

| Sample | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|
| Peeling electrification voltage [kV] | -0.7 | -0.1 | 0.0 | -0.3 | -0.2 | 0.0 | -0.1 | -0.2 | 0.0 | -0.4 | 0.0 | 0.0 |
| Wetting rate [cm2/sec] | 17.6 | 7.6 | 7.3 | 25.1 | 20.5 | 12.6 | 13.8 | 8.1 | 7.8 | 24.5 | 8.3 | 10.2 |
| Adhesion [N/25 mm] | 1.44 | 1.50 | 1.15 | 0.75 | 0.95 | 0.95 | 0.80 | 0.80 | 0.85 | 0.60 | 0.80 | 0.85 |

| Sample | Comparative Example 1 | Comparative Example 2 |
|---|---|---|
| Peeling electrification voltage [kV] | -1.0 | -1.2 |
| Wetting rate [cm2/sec] | 37.0 | 11.5 |
| Adhesion [N/25 mm] | 0.11 | 0.37 |

[Table 2]

| Sample | Example 25 | Example 26 | Example27 | Example 28 | Example 29 | Example 30 | Example 31 | Example 32 | Example 33 | Comparative Example 2 |
|---|---|---|---|---|---|---|---|---|---|---|
| Peeling electrification voltage [kV] | -0.7 | -0.4 | -0.5 | -0.1 | -0.3 | -0.2 | -0.3 | -0.4 | -0.7 | -1.2 |
| Wetting rate [cm2/sec] | 28.1 | 37.1 | 7.8 | 10.3 | 17.4 | 23.0 | 12.0 | 8.9 | 28.4 | 11.5 |
| Adhesion [N/25 mm] | 0.33 | 0.28 | 0.30 | 0.30 | 0.40 | 0.33 | 0.43 | 0.38 | 0.35 | 0.37 |

Industrial Applicability

The surface protective film of the present invention is suitably used in, for example, an application where a surface of a display member or an image recognition member is protected by attaching the film to the surface.

Reference Signs List

- **1** base material layer
- **2** pressure-sensitive adhesive layer
- **10** surface protective film

## Claims

**1.** A surface protective film, comprising:

a base material layer; and
a pressure-sensitive adhesive layer,
wherein the pressure-sensitive adhesive-layer contains an ionic liquid or an alkali metal salt.

**2.** A surface protective film according to claim 1, wherein a content of the ionic liquid in the pressure-sensitive adhesive layer is 0.1 to 1.5 wt%.

**3.** A surface protective film according to claim 1, wherein a content of the alkali metal salt in the pressure-sensitive adhesive layer is 0.04 to 0.3 wt%.

**4.** A surface protective film according to any one of claims 1 to 3, wherein the pressure-sensitive adhesive layer has a peeling electrification voltage of 0.7 kV or less.

**5.** A surface protective film according to any one of claims 1 to 4, wherein a wetting rate with respect to an acrylic plate in a surface of the pressure-sensitive adhesive layer, which is brought into contact with an adherend, is 5.0 $cm^2$/sec or more.

**6.** A surface protective film according to any one of claims 1 to 5, wherein an adhesion with respect to an acrylic plate in a surface of the pressure-sensitive adhesive layer, which is brought into contact with an adherend, is 0.02 to 1.5 N/25 mm.

**7.** A surface protective film according to any one of claims 1 to 6, wherein the surface protective film is used for a surface of a display member or an image recognition member.

**8.** A display member, which is covered with the surface protective film according to any one of claims 1 to 7.

**9.** An image recording member, which is covered with the surface protective film according to any one of claims 1 to 7.

FIG. 1

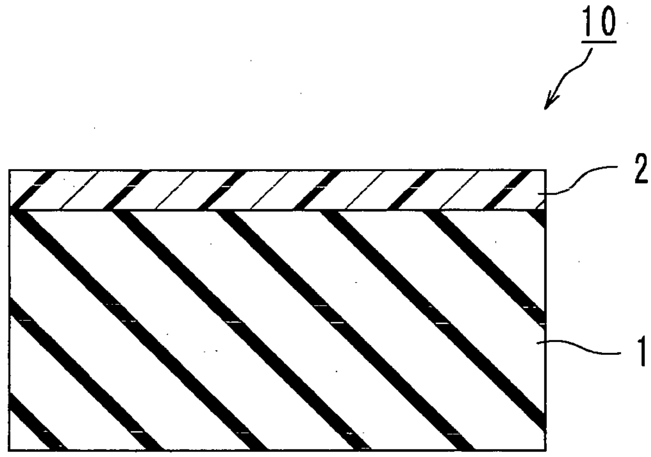

FIG. 2

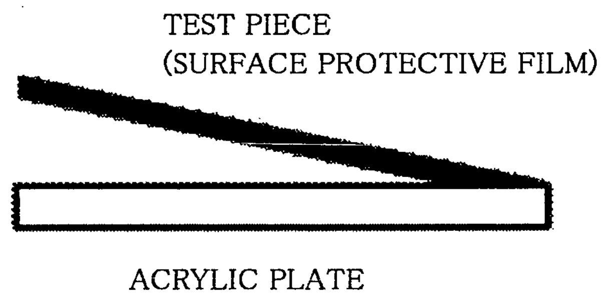

## INTERNATIONAL SEARCH REPORT

International application No. PCT/JP2012/069130

**A. CLASSIFICATION OF SUBJECT MATTER**

*C09J7/02*(2006.01)i, *B32B27/00*(2006.01)i, *C09J9/02*(2006.01)i, *C09J201/00*(2006.01)i, *G02B5/30*(2006.01)i, *G02F1/1333*(2006.01)i

According to International Patent Classification (IPC) or to both national classification and IPC

**B. FIELDS SEARCHED**

Minimum documentation searched (classification system followed by classification symbols)
C09J7/02, B32B27/00, C09J9/02, C09J201/00, G02B5/30, G02F1/1333

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2007-277484 A (Nitto Denko Corp.), 25 October 2007 (25.10.2007), claims; paragraph [0138]; example 1 (Family: none) | 1-2,4-9 |
| X | JP 2007-238766 A (Mitsubishi Chemical Corp.), 20 September 2007 (20.09.2007), claims; paragraph [0019]; examples 1, 4, 7, 13, 16, 19, 25 to 27 (Family: none) | 1-2,4-9 |
| X | JP 2006-182794 A (Mitsubishi Chemical Corp.), 13 July 2006 (13.07.2006), claims; paragraph [0001]; examples 3, 7 (Family: none) | 1,3-9 |

☒ Further documents are listed in the continuation of Box C.  ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 25 October, 2012 (25.10.12) | 06 November, 2012 (06.11.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2012/069130

C (Continuation). DOCUMENTS CONSIDERED TO BE RELEVANT

| Category* | Citation of document, with indication, where appropriate, of the relevant passages | Relevant to claim No. |
|---|---|---|
| A | JP 2009-227753 A (Toyo Ink Manufacturing Co., Ltd.), 08 October 2009 (08.10.2009), claims (Family: none) | 1,3-9 |
| A | JP 2011-37928 A (Toyo Ink Manufacturing Co., Ltd.), 24 February 2011 (24.02.2011), claims (Family: none) | 1,3-9 |

Form PCT/ISA/210 (continuation of second sheet) (July 2009)

**INTERNATIONAL SEARCH REPORT**

International application No.
PCT/JP2012/069130

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

Claim 1 has disclosed two inventions, which are "a surface protection film having a base material layer and an adhesive layer, said surface protection film containing an ion liquid in the adhesive layer", and "a surface protection film having a base material layer and an adhesive layer, said surface protection film containing an alkali metal salt in the adhesive layer". The two inventions have a common technical feature of "a surface protection film having a base material layer and an adhesive layer, said surface protection film containing an ionic compound in the adhesive layer".

(Continued to extra sheet)

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

INTERNATIONAL SEARCH REPORT

International application No.
PCT/JP2012/069130

Continuation of Box No.III of continuation of first sheet(2)

However, the above-said technical feature cannot be considered to be a special technical feature, since the technical feature does not make a contribution over the prior art in the light of the contents disclosed in the document 1 (JP 2007-277484 A (Nitto Denko Corp.), 25 October 2007 (25.10.2007)).

Further, there is no other same or corresponding special technical feature between these inventions.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010209324 A